# EUROPEAN PATENT SPECIFICATION

(11) **EP 4 077 952 B1**
(45) Date of publication and mention of the grant of the patent: **11.06.2025**
(21) Application number: 20828103.0
(22) Date of filing: 14.12.2020
(51) Int. Cl.: F16B 9/00, F16B 13/06, F16B 13/14

(54) **ANCHOR ASSEMBLY**
ANKERANORDNUNG
ENSEMBLE D'ANCRAGE

(30) Priority: 16.12.2019 GB 201918546
(43) Date of publication of application: 26.10.2022
(73) Proprietor: THREE SMITH GROUP LIMITED, Elland, West Yorkshire HX5 9JP (GB)
(72) Inventor: SMITH, Luke, Elland West, Yorkshire HX5 9JP (GB)
(74) Representative: Appleyard Lees IP LLP
(86) International application number: PCT/GB2020/053208
(87) International publication number: WO 2021/123746

(56) References cited:
- EP-A1- 0 201 154
- WO-A1-01/88388
- GB-A- 1 337 688
- US-A- 5 685 678
- US-A1- 2014 093 306

## Description

The present disclosure relates to an anchor assembly. In particular, the disclosure is concerned with an anchor assembly locatable in a substrate. The present disclosure is also concerned with an anchor assembly kit of parts and a method of locating an anchor assembly in a substrate.

### Background

Anchor bolts are well-known in the art as fixings for connecting bolts and screws to a substrate (for example walls and floors). They generally comprise an insert used to enable the attachment of a screw/bolt in a material that is porous or brittle and that would otherwise not support the weight of the object attached with the screw. For example expansion bolts have a rigid body which expands against a spring to fit into the substrate.

Such anchors can attach one object to another in situations where screws, nails, adhesives or other simple fasteners are either impractical or ineffective. However, these other fixings may be appropriate for use in other applications.

However, a demerit of these fixings is that any shock loads are transmitted from the structure to the substrate via the fixing, hence damaging the substrate supporting the plug/bolt, and hence loosening the anchor. This is especially likely to happen if the substrate is a frangible material, for example concrete, as the concrete may become cracked or crumble, allowing the anchor to move relative to the substrate. The prestressing of the substrate by the fixing (i.e. where the fixing is expanded against the substrate) contributes to the risk of substrate cracking, and hence the fixing becoming loosened. Also vibrations are directly transmitted through the fixing to/from the substrate. WO 01/88388A1 (Park Mun Yong) describes examples of the related art.

Hence, an anchor which is operable to be fixed in a substrate, and which is capable of holding a fixing means (for example a bolt) in place but able to withstand a shock force, lower the peak force transmitted to the substrate, and/or dampen vibrations, is highly desirable.

### Summary

According to the present disclosure there is provided an anchor assembly according to claim 1. Other features of the invention will be apparent from the dependent claims, and the description which follows.

Accordingly there may be provided an anchor assembly (20, 420) for receiving a fixing member (110). The assembly (20, 420) may comprise : a shell (22, 422) with a substrate engagement surface (24, 424) the shell (22, 422) defining a passage (26, 426) configured to receive the fixing member (110). The passage (26, 426) may extend from a trailing edge end (28, 428) of the shell (22, 422) towards a leading edge end (30, 430) of the shell (22, 422) along an alignment axis (10). An engagement member (50, 450) and a resilient member (40, 440) may be located in the passage (26, 426), the resilient member (40, 440) defining a through passage (42, 442) for the fixing member (110) to extend therethrough to engage with the engagement member (50, 450). The resilient member (40, 440) may be located between the engagement member (50, 450) and the trailing edge end (28, 428) of the shell (22, 422), the resilient member through passage (42, 442) extending between a first end (44, 444) and a second end (46, 446) of the resilient member (40, 440), the first end (44, 444) located between the second end (46, 446) and the trailing edge end (28, 428) of the shell (22, 422); the first end (44, 444) of the resilient member (40, 440) being mounted in the passage (26, 426) such that it is fixed relative to the passage (26, 426) and such that the second end (46, 446) of the resilient member (40, 440) is moveable with the engagement member (50, 450), and relative to the first end (44, 444), along the passage (26, 426).

The passage (26, 426) may comprise a first region (34, 434) which extends from the trailing edge end (28, 428) towards a second region (36, 436), the second region (36, 436) extending from the first region (34, 434) towards the leading edge end (30, 430), the resilient member (40, 440) being wider than the first region (34, 434) such that the resilient member is prevented from entering the first region (34, 434).

The resilient member (40, 440) may be sized to have a snug fit in the second region (36, 436).

The leading edge end (30, 430) may be closed with an end cap (38, 438).

The resilient member (40, 440) may comprise an outer guide surface (56, 456) which extends parallel to a resilient member axis (45, 445) defined by the resilient member through passage (42, 442).

At least one of the first end (44, 444) and second end (46, 446) of the resilient member (40, 440) may comprise a bevel configured to allow the resilient member (40, 440) to pivot relative to the alignment axis (10).

The engagement member (50, 450) may comprise a guide surface (53, 453) which extends parallel to an engagement member axis (55, 455).

The engagement member (50, 450) guide surface (53, 453) may comprise a bevelled leading and/or trailing edge configured to allow the engagement member (50, 450) to pivot relative to the alignment axis (10).

The shell (422) substrate engagement surface (424) may be substantially cylindrical, and a cutting ridge (423) may extend from the substrate engagement surface (424).

The cutting ridge (423) may extend around the substrate engagement surface (424), spiralling along at least part of the length of the substrate engagement surface (424).

The shell (22) substrate engagement surface (24) may define a longitudinally extending groove (35).

The shell (22) substrate engagement surface (24) may be substantially cylindrical with circumferentially extending grooves (25) provided in the substrate engagement surface (24).

The circumferentially extending grooves (25) comprise an indentation (27) which increases in diameter along the length of the substrate engagement surface (24) in a direction from the leading edge end (30) to the trailing edge end (28).

The longitudinally extending groove (35) may extend through at least one of the circumferentially extending grooves (25).

There may also be provided a kit of parts comprising an anchor assembly (20, 420) as described hereinbefore and a fixing member (110) configured to be received in the passage (26, 426) of the shell (22, 422).

There may also be provided a method of locating an anchor assembly according to the present disclosure in a substrate, comprising the steps of :
a. providing a hole (200) in the substrate (100);
b. inserting the anchor assembly (20, 420) into the hole (200);
c. entering the fixing member (110) into the shell (22, 422) so that it extends through the shell passage (26, 426), resilient member (40, 440) and engages with the engagement member (50, 450);
d. drawing the engagement member (50, 450) along the fixing member (110) to compress the resilient member (40, 440) and thereby tighten the fixing member (110) relative to the shell (22, 422).

Hence there is provided an anchor assembly, an anchor assembly kit of parts, and a method of locating an anchor assembly, wherein the anchor is configured to reduce shock loads and/or vibrations transmitted to/from the substrate into which the assembly is inserted.

### Brief Description of the Drawings

Examples of the present disclosure will now be described with reference to the accompanying drawings, in which:
Figure 1 shows a representation of an article (provided as a post) attached to a substrate using an anchor of the present disclosure;
Figure 2 is a representation of the arrangement of Figure 1 receiving an impact load;
Figures 3 to 9 show different views of an example of an anchor assembly according to the present disclosure;
Figures 10 to 17 show different views of a further example of an anchor assembly according to the present disclosure;
Figures 18, 19 show an anchor assembly according to the example shown in Figures 3 to 9 in use with a fixing member;
Figures 20, 21 show the examples of Figures 10 to 17 in use with a fixing member;
Figures 22, 23 shows further examples of the anchor assembly of the present disclosure; and
Figure 24 shows an example of an anchor assembly according to the present disclosure configured as a sleeve anchor.

### Detailed Description

The present disclosure relates to an anchor assembly configured to be located in (that is to say, attached to and/or fixed to) a substrate 100, for example a frangible substrate 100. However, the substrate may be any base member or structure (for example a building wall, ceiling or floor, window, or part of another structure, for example an air, land or sea based vehicle). The anchor assembly may be provided as a kit of parts. The present disclosure also relates to a method of locating an anchor assembly according to the present disclosure in a substrate.

The anchor assembly 20, 420 may be used in conjunction with a fixing member 110 to fix and/or locate any article in place, or provide an anchor, as may be required by a particular application. The anchor assembly 20, 420 may be provided in a range of sizes, and manufactured from a range of materials, depending on the application/use to which it is to be put.

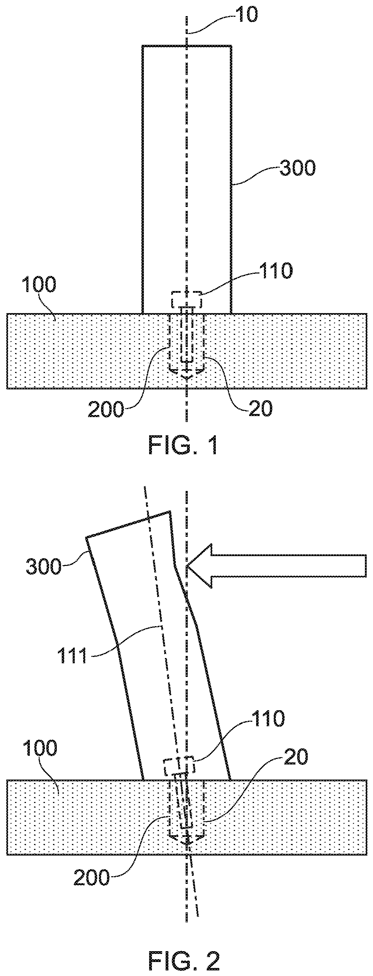

By way of a non-limiting example, Figure 1 shows an example of the anchor assembly 20, 420 according to the present disclosure located in a substrate 100. The anchor assembly 20, 420 is configured to hold an article, for example a post 300, in place. Hence, in this example, although not shown in the Figures, the base of the post 300 may have a plate or aperture at its base through which a fixing member (bolt) 110 may extend to clamp the post 300 to the substrate 100 using the anchor assembly 20, 420.

As can be seen from Figure 1, the anchor assembly 20, 420 has an alignment axis 10 which extends along its length, and in the example shown the fixing member 110 is centred on the alignment axis 10 when entered in the anchor assembly 20, 420. In Figure 1 the article/post 300 is also shown centred on the alignment axis 10 by way of example only, as the orientation of the article being held to the substrate will be dependent on its geometry, which may be of any shape. Likewise, in such an application, more than one anchor assembly 20, 420 may be used to hold the article/post in place. For example, instead of a centre fixing, two or more anchor assemblies may be located around the periphery of the post, for example passing through a flange extending from the base of the post. Put another way, the arrangement shown in Figure 1 is by way of non limiting example only to illustrate the functionality of the anchor assembly of the present disclosure in one of its many applications.

The fixing member 110 may have an axis 111, for example as shown in Figure 2, which at rest, in a normal configuration, is centred on the alignment axis 10 of the anchor assembly 20.

Figure 2 illustrates an advantage of the anchor assembly 20, 420 when an impact force is applied to the article 300. In the example shown, the anchor assembly 20, 420 is moved away from its at rest position (as shown in Figure 1) under the influence of the impact force, causing it to at least pivot and/or bend about the location at which it is anchored by the anchor assembly 20, 420.

As will be described below, the anchor assembly 20, 420 of the present disclosure is configured to reduce the peak force transmitted to the substrate 100 via the anchor assembly 20, 420 from an external force on the post, and thereby maintain a connection between the article 300 and substrate 100 under conditions in which an anchor assembly of the related art would have been broken free from the substrate 100.

Similarly, the anchor assembly 20, 420 of the present disclosure is configured to dampen vibrations, thereby reducing the amount of vibration energy transmitted between the substrate 100 and anchor assembly 20, 420.

Hence the anchor assembly 20, 420 is operable to reduce the transmission of peak forces and vibrations between the substrate and the article whether the force/vibrations originate from the substrate or the article.

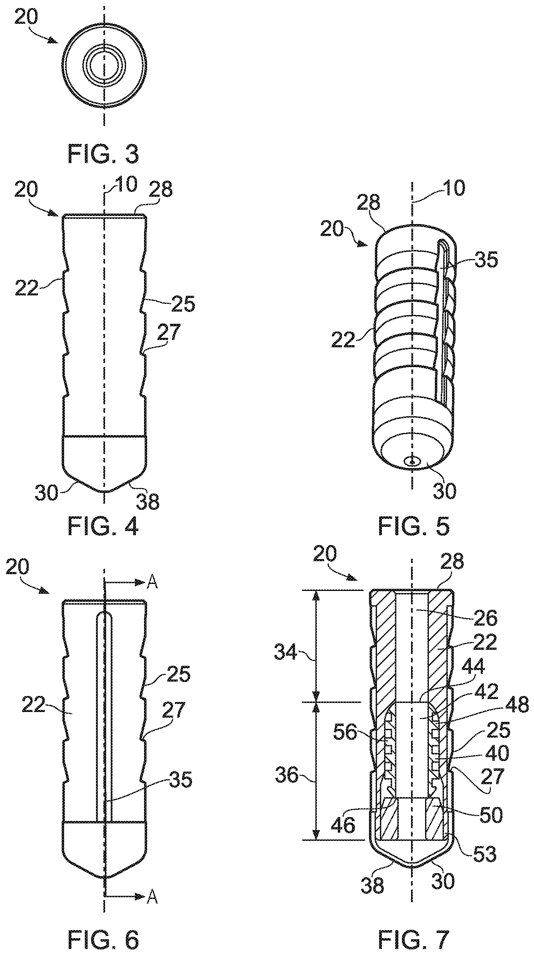

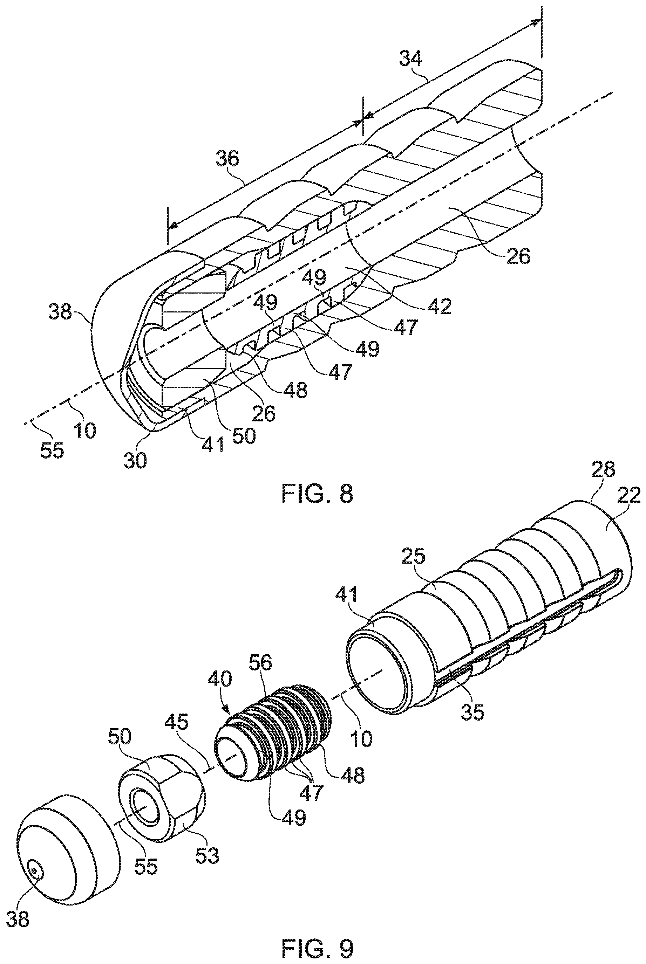

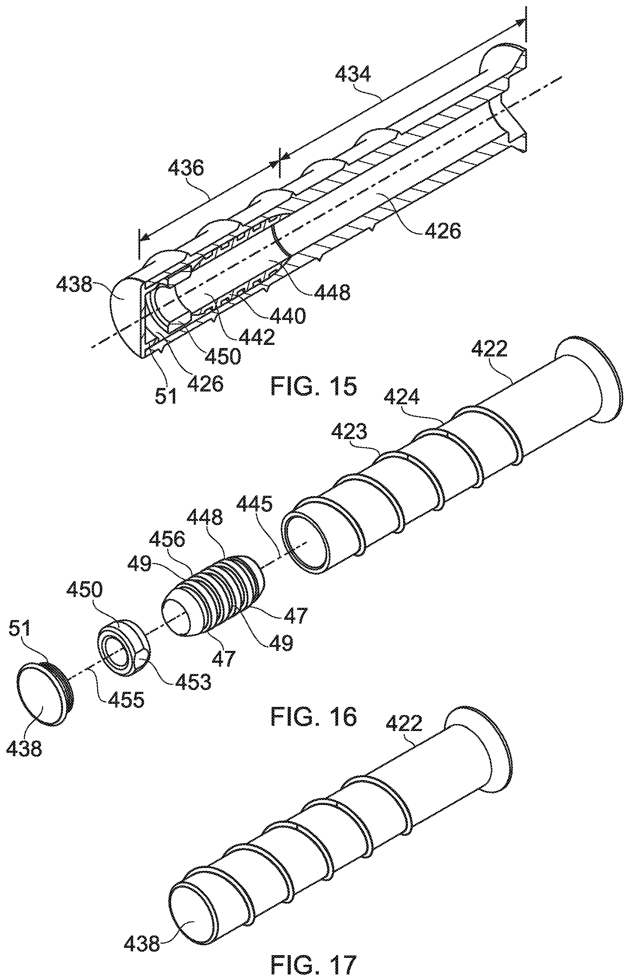

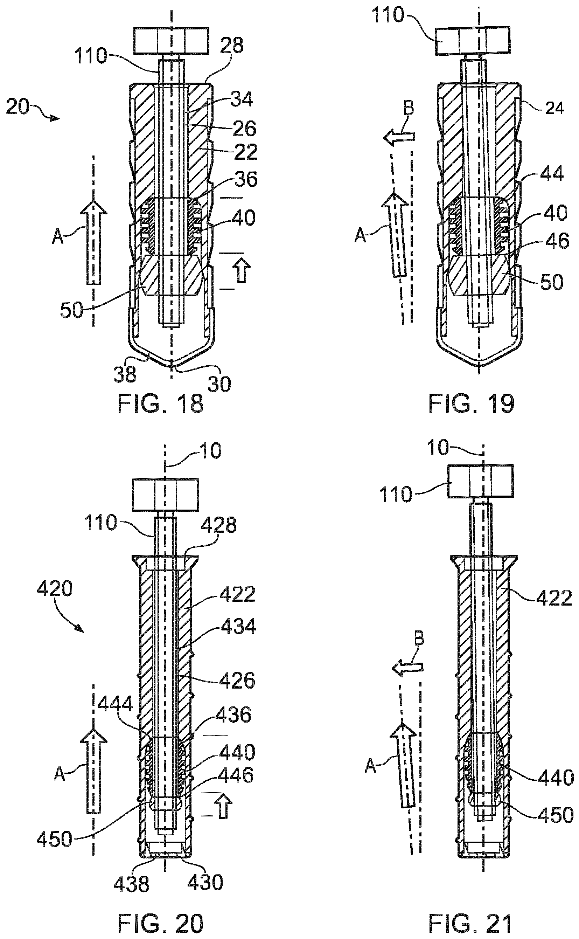

The features of the anchor assembly 20, 420 which enable this functionality will now be described with reference to the examples shown in Figures 3 to 9 and Figures 10 to 17, with further detail provided in Figures 18, 19 and Figures 20 to 24.

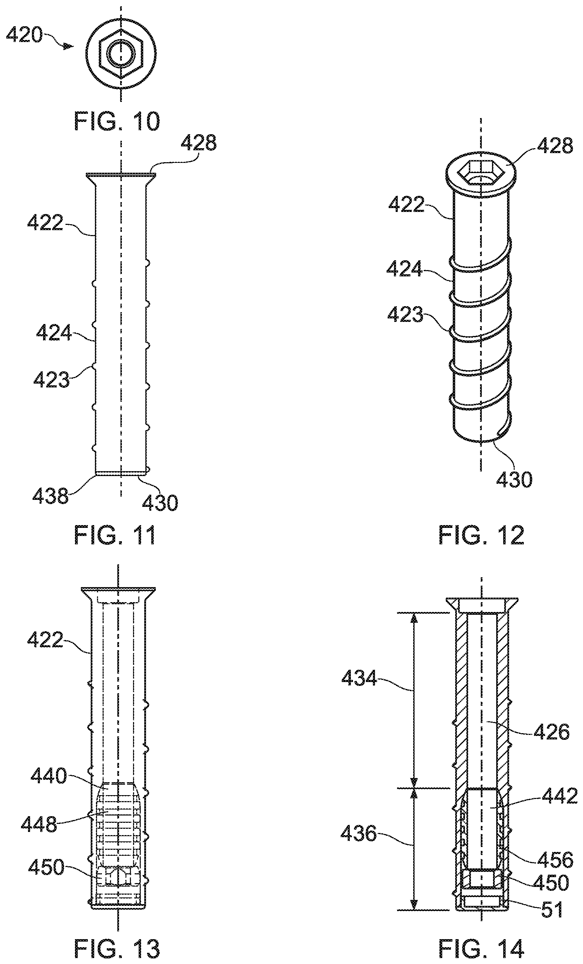

The first example of the anchor assembly 20 of the present disclosure is shown in Figures 3 to 9. A second example of the anchor assembly 420 accordingly to the present disclosure is shown in Figures 10 to 17. Despite some technical differences between the two example anchor assemblies 20, 420, they share a common operational principle, function and advantage.

As shown for both the examples, there is illustrated an anchor assembly which is locatable in (attachable to) a substrate 100. The anchor assembly 20, 420 may have particular efficacy with frangible substrates (for example concrete and like). The anchor assembly may also be used in other substrates, for example brick, tarmac, plastic, glass, wood and/or metal. The anchor assembly 20, 420 is configured for receiving a fixing member 110 as hereinbefore described.

The anchor assembly 20, 420 comprises a shell 22, 422 which a substrate engagement surface 24, 424. The shell 22, 422 defines a passage 26. The passage 26, 426 may be elongate. The passage 26, 426 is configured to receive the fixing member 110. The passage 26, 426 extends from a trailing edge end 28, 428 of the shell 22, 422 towards a leading edge end 30, 430 of the shell 22, 422 along the alignment axis 10. The leading edge end 30, 430 is at the opposite end of the shell 22, 422 to the trailing edge end 28, 428. Hence the alignment axis 10 extends between the trailing edge end 28, 428 and the leading edge end 30, 430. As shown in relation to the examples of Figures 3 to 9 the leading edge end 30 may be shaped to guide the shell 22 into a passage 200 provided in the substrate 100.

The shell 22, 422 may be made of a metal, a plastic, a fibre reinforced plastic or composite material. The shell 22, 422 may be manufactured using investment casting.

As shown in the example of figures 3 to 9 the leading edge end 30 may comprise a conical region or may be frustoconical. That is to say, the leading edge end 30 may start at a point or a first diameter and flare out to a larger diameter to meet the sides of the shell 22. Alternatively, as shown in the example of Figures 10 to 17, the leading edge end 430 may be planar/flat (that is to say perpendicular to the alignment axis 10 of the shell 422).

The leading edge end 30, 430 may be closed with an end cap 38, 438. As shown in the example of figures 3 to 9 the end cap 38 may comprise a conical region or may be frustoconical. That is to say, the end cap 38 may start at a point or a first diameter and flare out to a larger diameter to meet the sides of the shell 22. A cap support land 41 may be provided which is provided towards the leading edge end 30, with a surface for receiving and supporting the cap 38. The land 41 may extend in a direction parallel to the alignment axis 10. The outer surface of the cap 38 may be flush with the shell 22 engagement surface 24.

Alternatively, as shown in the example of Figures 10 to 17, the end cap 438 may be planar/flat (that is to say perpendicular to the alignment axis 10 of the shell 422). The cap 438 may comprise a shell 22 engagement land 51 which is configured to extend into the passage 426 and engage with the surface of the passage 426 to thereby locate the end cap 426 in place.

In both examples, an engagement member 50, 450 and a resilient member 40, 440 are located in the passage 26, 426. The resilient member 40, 440 may be compressible. That is to say the resilient member 40, 440 may be resiliently compressible. The resilient member 40 may be provided as a biasing member. That is to say, the resilient member 40 may have spring-like properties. Put another way, the resilient member 40 may be configured as a spring or spring member.

In some examples, not shown, instead of the cap 38, 438 closing the passage 26, 426, the engagement member 50 may close the passage 26, 426. Hence the engagement member 50 may at least in part define the leading edge end 30, 430.

The engagement member 50, 450 may be provided as a nut. However, the engagement member 50, 450 may be provided as any part suitable for engagement with the fixing member 110. For example the engagement member 50, 450 and fixing member 110 may have a snap fit and/or ratchet type connection to hold them together and allow the engagement member 50, 450 to travel along the fixing member 110.

In the example shown the resilient member 40, 440 comprises a body 48, 448 with a through passage 42, 442 for the fixing member 110 to extend therethrough to engage with the engagement member 50, 450.

The resilient member through passage 42, 442 may extend between a first end 44, 444 and a second end 46, 446 of the resilient member 40, 440.

The body 48, 448 may be formed from a solid body so that the features of the body 48, 448 are integrally formed. The body 48, 448 may comprise alternate thick walled regions 47 and thin walled regions 49 along the length of the body 48. That is to say, the body 48, 448 may comprise steps 47, 49 along its length to provide, in series, alternately arranged relatively thick wall sections 47 and relatively thin wall sections 49. Hence a spring factor (i.e. the ratio of the force affecting a spring to the displacement of the spring) of the resilient member 40 is at least in part defined as a function of the dimensions (e.g. length and thickness) and material of thin wall sections 49. The number and dimensions of the thick wall sections 47, as well as the material from which they are made, define the extent to which the body 48 may be compressed. The resilient member 40 may comprise (e.g. be made from) any suitable material which can be configured to have the required properties, for example a plastic, in particular polyurethane, or a metal.

However, the resilient member 40, 440 may also be provided in an alternative form, with an alternative configuration and material choice, as may be required by the application, provided it fulfils the functional requirements of the device of the present disclosure.

The engagement member 50, 450 is provided with a guide surface 53. The engagement member 50, 450 is engageable with the fixing member 110. Hence in an example where the engagement member 50, 450 is provided as a nut, the fixing member 110 is provided as a bolt with a compatible thread such that the fixing member 110 is engageable with the thread of the engagement member 50, 450. The engagement member 50, 450 and passage 26, 426 are configured so that the engagement member 50, 450 is moveable along the passage 26, 426. The through passage 26, 426 may be co-axial and/or concentric with the alignment axis 10. The resilient member 40, 440 may be located between the engagement member 50, 450 and the trailing edge end 28, 428 of the shell 22, 422.

The first end 44, 444 of the body 48 may be located between the second end 46, 446 of the body 48 and the trailing edge end 28, 428 of the shell 22, 422.

The resilient member 40, 440 may be mounted in the passage 26, 426 such that the first end 44, 444 of the body 48 is fixed relevant to the passage 26, 426 such that the second end 46, 446 is movable relative to the first end 44, 444 along the alignment axis 10.

The resilient member 40, 440 may be glued, welded or pinned or otherwise held relative to the passage 26, 426.

Additionally or alternatively, the resilient member 40, 440 is held in place by virtue of the relative size of the resilient member 40, 440 and the passage 26, 426. To this end, the passage 26, 426 may comprise a first region 34, 434 which extends from the trailing edge 28, 428 towards a second region 36, 436. The second region 36, 436 extends from the first region 34, 434 at least part of the distance towards the leading edge end 30, 430. The resilient member 40, 440 is wider (that is to say, has a larger diameter) than the first region 34, 434 such that the resilient member 40, 440 is prevented from entering the first region 34, 434 of the passage 26, 426.

The resilient member 40, 440 may comprise an outer guide surface 56, 456 which extends parallel to a resilient member axis 45, 445 defined by the resilient member through passage 42, 442.

The resilient member 40, 440 is sized to have a snug fit in the second region 36, 436, although the relative dimensions of the resilient member 40, 440 and the second region 36, 436 are such that at least part of the outer guide surface, 56, 456 of the body 45 can slide along the passage 26 while the resilient member 40, 440 is being compressed. That is to say, as shown in the figures, the relative dimensions of the resilient member 40, 440 and the second region 36, 436 are such that at least part of the outer guide surface 56, 456 of the body 48 can slide along the second region 36 of the passage 26 while the resilient member 40, 440 is being compressed.

At least one of the first end 44, 444 and second end 46, 446 of the resilient member 40, 440 comprises a bevelled or chamfered leading and/or trailing edge configured to allow the resilient member 40, 440 to pivot relative to the alignment axis 10. The bevel/chamfer may comprise a spherical profile. At least part of the engagement member 50, 450 guide surface 53, 453 may extend parallel to an engagement member axis 55, 455, which defines a centre line of engagement member 50 (i.e. the axis around which the engagement member 50 is centred and, in operation, rotates).

The engagement member 50, 450 guide surface 53, 453 may comprise a bevelled or chamfered leading and/or trailing edge configured to allow the engagement member 50, 450 to pivot relevant to the alignment axis 10. That is to say the engagement member 50, 450 guide surface 53 may be configured to not just slide along the passage 26, 426 of the shell 22, 422 but also rotate/pivot relative to it. The bevel/chamfer may comprise a spherical profile. In one example the engagement member 50, 450 guide surface 53 may be substantially spherical.

In the example shown in the figures, the shell 22, 422 engagement surface 24, 424 may define a substantially cylindrical shape. That is to say, the cross-sectional shape of the shell 22, 422, taken at right angles to the alignment axis 10, may be circular (see for example Figures 3, 10). In alternative examples the cross-sectional shape of the shell 22, 422, taken at right angles to the alignment axis 10, may be polygonal, for example triangular, rectangular, pentagonal or hexagonal, a long at least part, most of or all of the length of the shell 22.

In examples in which the shell 22, 422 is provided as polygonal, edges of the polygonal shape may define engagement features for engagement with the substrate into which the shell 22, 422 is located.

As shown in the example of Figures 3 to 9, the shell 22 substrate engagement surface 24 may be provided with circumferentially extending grooves 25. Each circumferentially extending groove 25 may be provided as an indent that extends at least part of the way around the outside of the shell 22. The grooves 25 may be provided as undercut ridges. The grooves 25 are spaced apart along the length of the shell 22.

With reference to the examples of Figures 3 to 9, each circumferentially extending groove 25 may comprise an indentation (i.e. recess) 27 which increases in diameter along the length of the substrate engagement surface 24 in a direction from the leading edge end 30 to the trailing edge end 28. That is to say that the circumferentially extending grooves 25 may be provided in the form of teeth or serrations along the longitudinal length of the shell 22 substrate engagement surface 24. The grooves 25 are configured to engage with the substrate 100. Alternatively a resin or other bonding medium may be entered in the hole provided in the substrate before the assembly 20 is entered in the hole which bonds the shell 22 to the substrate.

As shown in the example of Figures 3 to 9, the shell 22 substrate engagement surface 24 may be provided with a longitudinally extending groove 35 which extends at least part of the way between the leading edge end 30 and the trailing edge end 28. That is to say, the shell 22 substrate engagement surface 24 may define a longitudinally extending groove 35. The longitudinally extending groove 35 may extend from a location spaced apart from the trailing edge end 28 to a location spaced apart from the leading edge end 30.

In some examples (not shown), the longitudinally extending groove 35 extends from the trailing edge end 28 at least part of the way to the leading edge end 30. In some examples (not shown), the longitudinally extending groove 35 extends all of the way from the trailing edge end 28 to the leading edge end 30.

In examples in which one or more circumferentially extending grooves 25 are provided, the longitudinally extending groove 35 may extend through at least one of the circumferentially extending grooves 25. The longitudinally extending groove 35 may extend through some or all of the circumferentially extending grooves 25.

Hence one or more circumferentially extending grooves 25 may extend the whole way, or part of the way, around the shell 22, and be interrupted (i.e. crossed) by the longitudinally extending groove 35.

The longitudinally extending groove 35 may extend more deeply into the shell 22 substrate engagement surface 24 than the circumferentially extending grooves 25. At its deepest point, the longitudinally extending groove 35 may be at least 15% but no more than 50% the thickness of the wall of the shell 22. At its deepest point, the longitudinally extending groove 35 may be at least 17% but no more than 25% the thickness of the wall of the shell 22. At its deepest point, the longitudinally extending groove 35 may be about 23% of the thickness of the wall of the shell 22. At its deepest point, the longitudinally extending groove 35 may be about 20% of the thickness of the wall of the shell 22.

The longitudinally extending groove 35 is configured to provide a flow path for fluid. For example it may provide a flow path for resin used during location of the anchor assembly in the substrate. That is to say, the longitudinally extending groove 35 provides a flow path for any fluid provided in the hole 200 to escape from a region ahead of the leading edge end 30 to a region towards or at the trailing edge end 28. Thus resin used to hold the anchor assembly 20 in place may be distributed around the shell 22 substrate engagement surface 24, and specifically in the circumferentially extending grooves 25, as it may pass along the longitudinally extending groove 35 to one or more of the circumferentially extending grooves 25. That is to say, longitudinally extending groove 35 is configured to distribute resin to one or more of the circumferentially extending grooves 25 it connects. Distribution of the resin (or other fixing medium) assists in producing an improved bond between the anchor assembly 20 and the substrate 100 in which it is located.

Alternatively as shown in the examples of Figures 10 to 17, the shell 422 substrate engagement surface 424 may be provided with a cutting ridge (blade) 423 extending from the substrate engagement surface 424. The cutting ridge 423 may extend around the substrate engagement surface 424, spiralling along at least part of the length of the substrate engagement surface 424. The cutting ridge 423 is configured to cut into the material of the substrate 100 to assist with drawing the anchor assembly 420 into the substrate 100.

The fixing member 110 and shell passage 26, 426 may also be configured and sized relative to each other so the fixing member 110 may also move in a direction along its central axis 111 relative to the substrate and alignment axis 110 during an impact force. This helps to reduce the peak load/force on the anchor assembly 20.

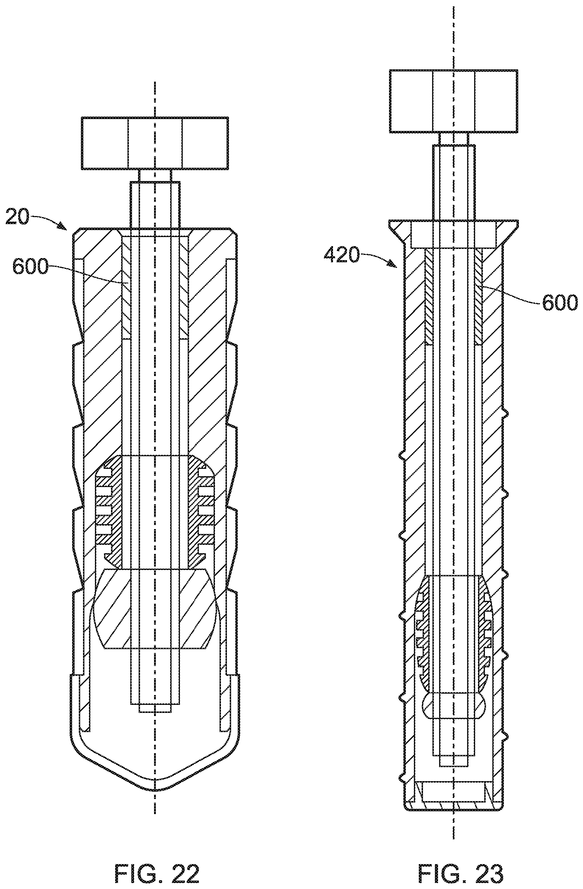

As shown in Figures 22, 23, the anchor assembly 20, 420 of the present disclosure may be provided with a sleeve 600 between the shaft of the fixing member 110 and the wall of the passage 26, 426. That is to say, the sleeve 600 may be located in the passage 26, 426 and, at least in part, spaces apart the shaft of the fixing member 110 from the shell 22, 422. The sleeve 600 may be provided in the form of a washer or tube which is located in, fixed to and/or formed in the passage 26, 426 prior to the fixing member 110 being entering in the passage 26, 426. Alternatively, the sleeve 600 may be provided around the shaft of the fixing member 100 and then urged into the passage 26, 426 when the fixing member 110 is entered into the shell 22, 422. In another example the sleeve 600 may be provided as a medium which is injected into the passage 26, 426 and cures/sets around the fixing member to fill a region of the passage 26, 426. The sleeve 600 may comprise a resilient and/or shock absorbing material configured to absorb and/or distribute an impact and/or vibration load applied to the shell 22, 422 and/or fixing member 110.

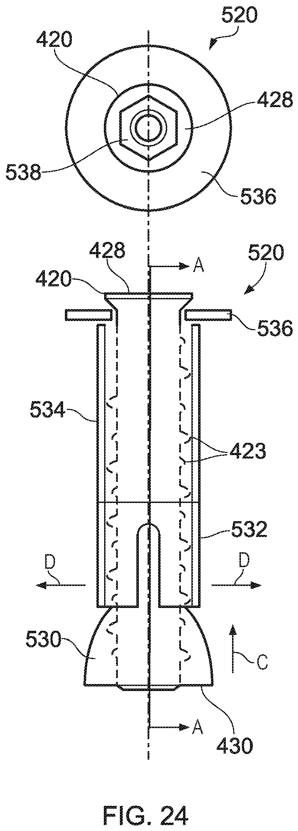

Figure 24 shows a further variant in which the anchor assembly 420 of the present disclosure may be provided as part of a sleeve anchor type assembly 520. This example includes in series, from the leading edge end 430, a forcing member 530, an expandable sleeve 532, a spacer sleeve 534 and a washer 536. The shell 422 is located in the forcing member 530, and the forcing member 530 is engaged with the screw thread like cutting ridge 423. The shell 422 is likewise located in the expandable sleeve 532, spacer sleeve 534 and washer 536. The trailing edge end 428 of the shell 422 is provided with an engagement feature 538 which may be used to receive a tool (for example an allen key) to rotate the shell 422 in the forcing member 530. Hence, in use, the sleeve anchor type assembly 520 is located in a hole 200 in a substrate and then the shell 422 is rotated, causing the shell 422 to rotate relative to and into the forcing member 530 such that the forcing member 530 travels along the length of the shell 422 in the direction shown as arrow C, engaging with the expandable sleeve 532 which, trapped between the forcing member 530 and spacer sleeve 534 and/or washer 536, is forced radially outwards as indicated by arrows D to engage with the substrate to thereby locate the anchor assembly 420 in the substrate.

In other examples, the anchor assembly 20, 420 may be located into the substrate in combination with any conventional means, for example expanding plugs into which the shells 22, 422 are located, fillers and/or adhesives.

Hence there may be provided a kit of parts to provide an anchor assembly 20, 420 according to the present disclosure, which may include a fixing member 110 figured to be received in the passage 26, 426 of the shell 22, 422. The kit of parts may also comprise a set of instructions defining how the anchor assembly should be operated according to the method of the present disclosure.

The anchor assembly 20, 420 of the present disclosure may be operated by the following method. The anchor assembly 20, 420 may be provided to a user in an assembled state, or as a kit of parts to be assembled by the user.

First a hole/passage 200 may be provided in the substrate 100. The anchor assembly 20, 420 may then be entered into the hole 200, as shown in Figure 1. The hole/passage 200 should be sized appropriately relative to the shell 22, 422 such that the shell 22, 422 is a snug fit in the hole/passage 200.

With reference to the examples of Figures 3 to 9, the circumferentially extending grooves 25 engage with the substrate 100. Alternatively a resin or other bonding medium may be entered in the hole 200 which bonds the shell 22 to the substrate.

With reference to the examples of Figures 10 to 17, the shell 422 is rotated so that the cutting ridge 423 cuts into the substrate 100 to assist with drawing the anchor assembly 20 into the substrate 100.

With reference to the examples of Figures 22, 23, the sleeve anchor type assembly 520 is positioned and fixed in place as described above in relation to Figures 22, 23.

The article 300 (for example the post as shown in Figures 1, 2) may then be positioned relative to the anchor shell and the fixing member 110 entered in the shell, for example through an aperture or slot in the article 300, so that the fixing member 110 extends through the shell passage 26, 426, through the resilient member 40, 440 and engages with the engagement member 50, 450. The fixing member 110 and engagement member 50 are then operated so that the engagement member 50, 450 is drawn along the fixing member 110 which thereby compresses the resilient member 40, 440 and tightens the fixing member 110 relative to the shell 22, 422. In the example in which the engagement member 50, 450 is a nut and the fixing member 110 is a bolt, the engagement member 50, 450 is drawn along the fixing member 110 by the act of turning the bolt 110, which thereby compresses the resilient member 40, 440 and tightens the fixing member 110 relative to the shell 22, 422. That is to say, the engagement member 50, 450 is tightened against the resilient member 40, 440.

This is illustrated in Figure 18 for the examples of 3 to 9 and Figure 20 for the examples of Figures 10 to 17. Figures 18, 20 illustrate the engagement member 50, 450 being drawn along the screw thread of the fixing member 110 in a direction "A" towards the trailing edge end 28, 428 of the shell 22, 422 by the act of tightening (i.e. rotating) the fixing member 110. This compresses the resilient member 40, 440 which is held in position in the passage 26, 426. As can be seen in the examples of Figures 18, 20, the resilient member 40, 440 is located in the passage 26, 426 by virtue of the resilient member being unable to move into the first region 34, 434 because it is wider than the first region 34, 434. The resilient member 40, 440 may not be compressed to its maximum extent during tightening of the fixing member 110. Instead it may be tightened up to a predetermined torque which corresponds to a condition in which the resilient member 40, 440 may be compressed further.

At the same time as the resilient member 40, 440 is being compressed, the engagement member 50, 450 is drawn along the second region 36, 436 towards the trailing edge end 28, 428 of the shell 22, 422 in direction "A". Indeed it is the act of engagement member 50, 450 being drawn along the passage 26 which compresses the resilient member 40, 440.

That the resilient member 40, 440 remains further compressible after the fixing member 110 has been tightened means that when an impact load is applied to the article/post 300 then the fixing member 110 and engagement member 50, 450 may move further along the passage 26, 426 in the direction towards the trailing edge end 28, 428 of the shell 22, 422 to thereby reduce the load on the shell 22, 422 and hence reduce the force transmitted to the substrate 100 which is engaged with the outer surface of the shell 22, 422.

In examples in which the engagement member 50, 450 has a bevelled or chamfered trailing and/or leading edge (or is substantially spherical) the fixing member 110 and engagement member 50, 450 may pivot relative to the alignment axis 10 of the shell 22. This is shown in Figures 19, 21 where the fixing member 110 is shown angled away from the alignment axis 10 in direction "B". Hence the fixing member 110 and engagement member 50, 450 may move relative to the shell 22, 422 by rotating, pivoting, and/or tipping relative to it thereby reducing the maximum load imparted to the substrate via its engagement with the shell 22, 422.

Hence in operation, the fixing member may be able to move longitudinally along the length of the passage 26, 426 of the shell 22, 422 in direction "A" and/or pivot relative to the shell 22, 422 in direction "B" to reduce the peak load transmitted to the substrate 100 via the shell 22, 422.

When the load is removed, the resilient member 40, 440 may expand back to its former length (i.e. prior to the impact force) and hence draw the fixing member 110 and engagement member 50, 450 back into its previous orientation and location in the shell 22, 422. The act of expanding the resilient member 40, 440 may also draw a fixing member 110 from a pivoted orientation (as shown in Figures 19, 21) back to alignment with the alignment axis 10 as shown in Figures 18, 20 respectively. This may in part be aided by the sleeve 600, where provided.

Hence there is provided an anchor assembly, an anchor assembly kit of parts, and a method of locating an anchor assembly, wherein the anchor is configured to reduce the effect of shock loads and/or vibration on the substrate into which the assembly is inserted.

Additionally, since the anchor assembly of the present disclosure allows for movement of the fixing member 110 relative to the anchor (for example in directions "A", "B" as shown in Figures 19, 20) then the anchor assembly may compensate for larger assembly tolerances than anchors of the related art. Hence structures may be more easily constructed, with less rework and adjustment, than with anchor fixings of the related art.

In operation the resilient member of the present disclosure is pre-loaded and hence provides a rigid anchor point, as well as an anchor which may allow a fixing member to move relative to the shell in which it is located, either along an alignment axis 10, or to pivot relative to the alignment axis. This "give" (i.e. relative movement) enables the anchor to relieve shock loads/forces and vibrations. In turn this reduces the likelihood of damage to the substrate and/or article it is used to join, and hence maintains the anchor in place, and maintains the integrity of the substrate and/or article, in scenarios in which a conventional anchor would not.

The anchor assembly may be used in applications where the vibration and/or impact originates from the substrate 100 and/or or the article 300 attached to the substrate. For example the anchor assembly 20, 420 could be used in applications such as mounting engine components to a chassis or frame of a vehicle, or mounting fittings to a vehicle (for example seating and/or cupboards on land, air and sea vehicles). It may also be used in buildings to reduce the effect of seismic events on articles attached to the building, or form part of the superstructure of the building itself.

Attention is directed to all papers and documents which are filed concurrently with or previous to this specification in connection with this application and which are open to public inspection with this specification.

All of the features disclosed in this specification (including abstract and drawings), and/or all of the steps of any method or process so disclosed, may be combined in any combination, except combinations where at least some of such features and/or steps are mutually exclusive.

Each feature disclosed in this specification (including abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s).

## Claims

1. An anchor assembly (20, 420) for receiving a fixing member (110), the assembly (20, 420) comprising :
a shell (22, 422) with a substrate engagement surface (24, 424);
the shell (22, 422) defining a passage (26, 426) configured to receive the fixing member (110), the passage (26, 426) extending from a trailing edge end (28, 428) of the shell (22, 422) towards a leading edge end (30, 430) of the shell (22, 422) along an alignment axis (10),
an engagement member (50, 450) and a resilient member (40, 440) located in the passage (26, 426),
the resilient member (40, 440) defining a through passage (42, 442) for the fixing member (110) to extend therethrough to engage with the engagement member (50, 450),
**characterised in that**:
the engagement between the engagement member (50, 450) and the fixing member (110) being such that the engagement member (50, 450) is configured to travel along the fixing member (110),
the engagement member (50, 450) and the passage (26, 426) being configured so that the engagement member (50, 450) is moveable along the passage (26, 426),
the resilient member (40, 440) located between the engagement member (50, 450) and the trailing edge end (28, 428) of the shell (22, 422),
the resilient member through passage (42, 442) extending between a first end (44, 444) and a second end (46, 446) of the resilient member (40, 440), the first end (44, 444) located between the second end (46, 446) and the trailing edge end (28, 428) of the shell (22, 422); and
the first end (44, 444) of the resilient member (40, 440) being mounted in the passage (26, 426) such that it is fixed relative to the passage (26, 426) and such that the second end (46, 446) of the resilient member (40, 440) is moveable with the engagement member (50, 450), and relative to the first end (44, 444), as the engagement member (50, 450) moves along the passage (26, 426) and travels along the fixing member (110).

2. An anchor assembly as claimed in claim 1 wherein
the passage (26, 426) comprises a first region (34, 434) which extends from the trailing edge end (28, 428) towards a second region (36, 436), the second region (36, 436) extending from the first region (34, 434) towards the leading edge end (30, 430),
the resilient member (40, 440) being wider than the first region (34, 434) such that the resilient member is prevented from entering the first region (34, 434).

3. An anchor assembly as claimed in claim 2 wherein the resilient member (40, 440) is sized to have a snug fit in the second region (36, 436).

4. An anchor assembly as claimed in any one of the preceding claims wherein the leading edge end (30, 430) is closed with an end cap (38, 438).

5. An anchor assembly as claimed in any one of claims 1 to 4 wherein
the resilient member (40, 440) comprises an outer guide surface (56, 456) which extends parallel to a resilient member axis (45, 445) defined by the resilient member through passage (42, 442).

6. An anchor assembly as claimed in any one of claims 1 to 5 wherein
at least one of the first end (44, 444) and second end (46, 446) of the resilient member (40, 440) comprise a bevel configured to allow the resilient member (40, 440) to pivot relative to the alignment axis (10).

7. An anchor assembly as claimed in any one of claims 1 to 6 wherein
the engagement member (50, 450) comprises a guide surface (53, 453) which extends parallel to an engagement member axis (55, 455).

8. An anchor assembly as claimed in claim 7 wherein
the engagement member (50, 450) guide surface (53, 453) comprises a bevelled leading and/or trailing edge configured to allow the engagement member (50, 450) to pivot relative to the alignment axis (10).

9. An anchor assembly as claimed in any one of claims 1 to 8 wherein the shell (422) substrate engagement surface (424) is substantially cylindrical, and a cutting ridge (423) extends from the substrate engagement surface (424).

10. An anchor assembly as claimed in claim 9 wherein
the cutting ridge (423) extends around the substrate engagement surface (424), spiralling along at least part of the length of the substrate engagement surface (424).

11. An anchor assembly as claimed in any one of the preceding claims wherein the shell (22) substrate engagement surface (24) defines a longitudinally extending groove (35).

12. An anchor assembly as claimed in any one of claims 1 to 8 wherein the shell (22) substrate engagement surface (24) is substantially cylindrical with circumferentially extending grooves (25) provided in the substrate engagement surface (24).

13. An anchor assembly as claimed in claim 12 wherein the circumferentially extending grooves (25) comprise an indentation (27) which increases in diameter along the length of the substrate engagement surface (24) in a direction from the leading edge end (30) to the trailing edge end (28).

14. An anchor assembly as claimed in any one of claims 12, 13
wherein the longitudinally extending groove (35) extends through at least one of the circumferentially extending grooves (25).

15. A kit of parts comprising an anchor assembly (20, 420) as claimed in any one of the preceding claims and a fixing member (110) configured to be received in the passage (26, 426) of the shell (22, 422).

## Patentansprüche

1. Ankeranordnung (20, 420) zum Aufnehmen eines Befestigungselements (110), wobei die Anordnung (20, 420) Folgendes umfasst:
eine Hülse (22, 422) mit einer Substratauflagefläche (24, 424);
wobei die Hülse (22, 422) einen Durchgang (26, 426) definiert, der dazu ausgelegt ist, das Befestigungselement (110) aufzunehmen, wobei sich der Durchgang (26, 426) aus einem hinteren Kantenende (28, 428) der Hülse (22, 422) zu einem vorderen Kantenende (30, 430) der Hülse (22, 422) entlang einer Ausrichtungsachse (10) erstreckt,
ein Eingriffselement (50, 450) und ein elastisches Element (40, 440), die in dem Durchgang (26, 426) angeordnet sind,
wobei das elastische Element (40, 440) einen Durchgang (42, 442) definiert, durch den das Befestigungselement (110) hindurchgeführt werden kann, um mit dem Eingriffselement (50, 450) in Eingriff zu treten,
**dadurch gekennzeichnet, dass**:
der Eingriff zwischen dem Eingriffselement (50, 450) und dem Befestigungselement (110) derart ist, dass das Eingriffselement (50, 450) dazu ausgelegt ist, entlang des Befestigungselements (110) zu wandern,
das Eingriffselement (50, 450) und der Durchgang (26, 426) so ausgelegt sind, dass das Eingriffselement (50, 450) entlang des Durchgangs (26, 426) bewegbar ist,
das elastische Element (40, 440) zwischen dem Eingriffselement (50, 450) und dem hinteren Kantenende (28, 428) der Hülse (22, 422) angeordnet ist,
der Durchgang (42, 442) des elastischen Elements sich zwischen einem ersten Ende (44, 444) und einem zweiten Ende (46, 446) des elastischen Elements (40, 440) erstreckt, wobei das erste Ende (44, 444) zwischen dem zweiten Ende (46, 446) und dem hinteren Kantenende (28, 428) der Hülse (22, 422) angeordnet ist; und
das erste Ende (44, 444) des elastischen Elements (40, 440) im Durchgang (26, 426) derart montiert ist, dass es relativ zum Durchgang (26, 426) fixiert ist und dass das zweite Ende (46, 446) des elastischen Elements (40, 440) gemeinsam mit dem Eingriffselement (50, 450) und relativ zum ersten Ende (44, 444) bewegbar ist, wenn das Eingriffselement (50, 450) entlang des Durchgangs (26, 426) wandert und entlang des Befestigungselements (110) geführt wird.

2. Ankeranordnung nach Anspruch 1, wobei
der Durchgang (26, 426) einen ersten Bereich (34, 434) umfasst, der sich vom hinteren Kantenende (28, 428) zu einem zweiten Bereich (36, 436) erstreckt, wobei sich der zweite Bereich (36, 436) vom ersten Bereich (34, 434) zum vorderen Kantenende (30, 430) erstreckt,
das elastische Element (40, 440) breiter als der erste Bereich (34, 434) ist, sodass das elastische Element am Eintritt in den ersten Bereich (34, 434) gehindert ist.

3. Ankeranordnung nach Anspruch 2, wobei das elastische Element (40, 440) so dimensioniert ist, dass es im zweiten Bereich (36, 436) passgenau sitzt.

4. Ankeranordnung nach einem der vorhergehenden Ansprüche, wobei das vordere Kantenende (30, 430) mit einer Endkappe (38, 438) verschlossen ist.

5. Ankeranordnung nach einem der Ansprüche 1 bis 4, wobei
das elastische Element (40, 440) eine äußere Führungsfläche (56, 456) umfasst, die parallel zu einer durch den Durchgang (42, 442) des elastischen Elements definierten Achse (45, 445) verläuft.

6. Ankeranordnung nach einem der Ansprüche 1 bis 5, wobei
mindestens eines des ersten Endes (44, 444) und des zweiten Endes (46, 446) des elastischen Elements (40, 440) eine Fase aufweist, die dazu ausgelegt ist, das elastische Element (40, 440) relativ zur Ausrichtungsachse (10) schwenkbar zu machen.

7. Ankeranordnung nach einem der Ansprüche 1 bis 6, wobei
das Eingriffselement (50, 450) eine Führungsfläche (53, 453) umfasst, die parallel zu einer Eingriffselementachse (55, 455) verläuft.

8. Ankeranordnung nach Anspruch 7, wobei
die Führungsfläche (53, 453) des Eingriffselements (50, 450) eine abgeschrägte vordere und/oder hintere Kante aufweist, die dazu ausgelegt ist, das Eingriffselement (50, 450) relativ zur Ausrichtungsachse (10) schwenkbar zu machen.

9. Ankeranordnung nach einem der Ansprüche 1 bis 8, wobei die Substratauflagefläche (424) der Hülse (422) im Wesentlichen zylindrisch ist und ein Schneidgrat (423) von der Substratauflagefläche (424) absteht.

10. Ankeranordnung nach Anspruch 9, wobei
der Schneidgrat (423) um die Substratauflagefläche (424) herum verläuft und sich entlang zumindest eines Teils der Länge der Substratauflagefläche (424) spiralförmig erstreckt.

11. Ankeranordnung nach einem der vorhergehenden Ansprüche, wobei die Substratauflagefläche (24) der Hülse (22) eine sich in Längsrichtung erstreckende Nut (35) definiert.

12. Ankeranordnung nach einem der Ansprüche 1 bis 8, wobei die Substratauflagefläche (24) der Hülse (22) im Wesentlichen zylindrisch ist und in der Substratauflagefläche (24) umlaufende Nuten (25) vorgesehen sind.

13. Ankeranordnung nach Anspruch 12, wobei die umlaufenden Nuten (25) eine Vertiefung (27) aufweisen, deren Durchmesser sich entlang der Länge der Substratauflagefläche (24) in Richtung vom vorderen Kantenende (30) zum hinteren Kantenende (28) vergrößert.

14. Ankeranordnung nach einem der Ansprüche 12, 13, wobei die sich in Längsrichtung erstreckende Nut (35) durch mindestens eine der umlaufenden Nuten (25) hindurch verläuft.

15. Satz von Bauteilen, umfassend eine Ankeranordnung (20, 420) nach einem der vorhergehenden Ansprüche und ein Befestigungselement (110), das dazu ausgelegt ist, im Durchgang (26, 426) der Hülse (22, 422) aufgenommen zu werden.

## Revendications

1. Ensemble d'ancrage (20, 420) destiné à recevoir un élément de fixation (110), l'ensemble (20, 420) comprenant :
une enveloppe (22, 422) ayant une surface de mise en prise de substrat (24, 424) ;
l'enveloppe (22, 422) définissant un passage (26, 426) configuré pour recevoir l'élément de fixation (110), le passage (26, 426) s'étendant à partir d'une extrémité de bord de fuite (28, 428) de l'enveloppe (22, 422) vers une extrémité de bord d'attaque (30, 430) de l'enveloppe (22, 422) le long d'un axe d'alignement (10),
un élément de mise en prise (50, 450) et un élément élastique (40, 440) situé dans le passage (26, 426),
l'élément élastique (40, 440) définissant un passage traversant (42, 442) pour que l'élément de fixation (110) s'étende à travers celui-ci afin de se mettre en prise avec l'élément de mise en prise (50, 450),
**caractérisé en ce que** :
la mise en prise entre l'élément de mise en prise (50, 450) et l'élément de fixation (110) est telle que l'élément de mise en prise (50, 450) soit configuré pour se déplacer le long de l'élément de fixation (110),
l'élément de mise en prise (50, 450) et le passage (26, 426) sont configurés de sorte que l'élément de mise en prise (50, 450) soit mobile le long du passage (26, 426), l'élément élastique (40, 440) étant situé entre l'élément de mise en prise (50, 450) et l'extrémité de bord de fuite (28, 428) de l'enveloppe (22, 422),
le passage traversant (42, 442) d'élément élastique s'étendant entre une première extrémité (44, 444) et une deuxième extrémité (46, 446) de l'élément élastique (40, 440), la première extrémité (44, 444) étant située entre la deuxième extrémité (46, 446) et l'extrémité de bord de fuite (28, 428) de l'enveloppe (22, 422) ; et
la première extrémité (44, 444) de l'élément élastique (40, 440) étant montée dans le passage (26, 426) de telle sorte qu'elle soit fixe relativement au passage (26, 426) et de telle sorte que la deuxième extrémité (46, 446) de l'élément élastique (40, 440) soit mobile avec l'élément de mise en prise (50, 450), et relativement à la première extrémité (44, 444), à mesure que l'élément de mise en prise (50, 450) se meut le long du passage (26, 426) et se déplace le long de l'élément de fixation (110).

2. Ensemble d'ancrage selon la revendication 1 dans lequel
le passage (26, 426) comprend une première région (34, 434) qui s'étend à partir de l'extrémité de bord de fuite (28, 428) vers une deuxième région (36, 436), la deuxième région (36, 436) s'étendant à partir de la première région (34, 434) vers l'extrémité de bord d'attaque (30, 430),
l'élément élastique (40, 440) étant plus large que la première région (34, 434) de telle sorte que l'élément élastique soit empêché d'entrer dans la première région (34, 434) .

3. Ensemble d'ancrage selon la revendication 2 dans lequel l'élément élastique (40, 440) est dimensionné pour avoir un ajustement serré dans la deuxième région (36, 436) .

4. Ensemble d'ancrage selon l'une quelconque des revendications précédentes dans lequel l'extrémité de bord d'attaque (30, 430) est fermée avec un capuchon d'extrémité (38, 438).

5. Ensemble d'ancrage selon l'une quelconque des revendications 1 à 4 dans lequel
l'élément élastique (40, 440) comprend une surface de guidage externe (56, 456) qui s'étend parallèlement à un axe d'élément élastique (45, 445) défini par le passage traversant (42, 442) d'élément élastique.

6. Ensemble d'ancrage selon l'une quelconque des revendications 1 à 5 dans lequel
au moins l'une de la première extrémité (44, 444) et de la deuxième extrémité (46, 446) de l'élément élastique (40, 440) comprend un biseau configuré pour permettre à l'élément élastique (40, 440) de pivoter relativement à l'axe d'alignement (10).

7. Ensemble d'ancrage selon l'une quelconque des revendications 1 à 6 dans lequel
l'élément de mise en prise (50, 450) comprend une surface de guidage (53, 453) qui s'étend parallèlement à un axe (55, 455) d'élément de mise en prise.

8. Ensemble d'ancrage selon la revendication 7 dans lequel
la surface de guidage (53, 453) d'élément de mise en prise (50, 450) comprend un bord d'attaque et/ou de fuite biseauté configuré pour permettre à l'élément de mise en prise (50, 450) de pivoter relativement à l'axe d'alignement (10).

9. Ensemble d'ancrage selon l'une quelconque des revendications 1 à 8 dans lequel la surface de mise en prise de substrat (424) d'enveloppe (422) est substantiellement cylindrique, et une arête de coupe (423) s'étend à partir de la surface de mise en prise de substrat (424).

10. Ensemble d'ancrage selon la revendication 9 dans lequel
l'arête de coupe (423) s'étend autour de la surface de mise en prise de substrat (424), allant en spirale le long d'au moins une portion de la longueur de la surface de mise en prise de substrat (424).

11. Ensemble d'ancrage selon l'une quelconque des revendications précédentes dans lequel la surface de mise en prise de substrat (24) d'enveloppe (22) définit une rainure (35) s'étendant de manière longitudinale.

12. Ensemble d'ancrage selon l'une quelconque des revendications 1 à 8 dans lequel la surface de mise en prise de substrat (24) d'enveloppe (22) est substantiellement cylindrique avec des rainures (25) s'étendant de manière circonférentielle prévues dans la surface de mise en prise de substrat (24).

13. Ensemble d'ancrage selon la revendication 12 dans lequel les rainures (25) s'étendant de manière circonférentielle comprennent une indentation (27) qui augmente en diamètre le long de la longueur de la surface de mise en prise de substrat (24) dans une direction de l'extrémité de bord d'attaque (30) à l'extrémité de bord de fuite (28).

14. Ensemble d'ancrage selon l'une quelconque des revendications 12, 13
dans lequel la rainure (35) s'étendant de manière longitudinale s'étend à travers au moins l'une des rainures (25) s'étendant de manière circonférentielle.

15. Kit de pièces comprenant un ensemble d'ancrage (20, 420) selon l'une quelconque des revendications précédentes et un élément de fixation (110) configuré pour être reçu dans le passage (26, 426) de l'enveloppe (22, 422).
